# DEMANDE DE BREVET EUROPEEN

(11) **EP 3 912 459 A1**
(43) Date de publication de la demande: **24.11.2021**
(21) Numéro de dépôt: 21174820.7
(22) Date de dépôt: 19.05.2021
(51) Int. Cl.: A01G 9/16, B65D 85/52, A47G 7/00, A01G 7/04, A47G 7/02

(54) **DISPOSITIF ÉQUIPANT UN RÉCIPIENT DE CULTURE IN VITRO POUR FORMER AVEC LUI UN OBJET DE DÉCORATION INTÉRIEURE ET RÉCIPIENT OU GROUPE DE RÉCIPIENTS AINSI ÉQUIPÉS**

(30) Priorité: 20.05.2020 FR 2005367
(71) Demandeur: Inplanta, 87069 Limoges Cedex 3 (FR); Université de Limoges, 87032 Limoges (FR)
(72) Inventeur: GLOAGUEN, Vincent, 87230 Les Cars (FR); MARIONNET, David, 19100 Brive-la-Gaillarde (FR); PLAZANET, Idelette, 87120 Nedde (FR)
(74) Mandataire: Cabinet Chaillot

(57) **Abrégé**

La présente invention porte sur un dispositif (3) de croissance pour plantes destiné à équiper au moins un récipient (2) transparent de culture *in vitro* d'au moins une plante (P) en place sur un substrat se trouvant dans le fond de l'au moins un récipient (2), caractérisé par le fait qu'il comprend un organe de réception de la partie inférieure du ou de chaque récipient (2), l'organe de réception comprenant :
- une enveloppe (9) configurée pour entourer au moins partiellement la partie inférieure de l'au moins un récipient (2), l'enveloppe (9) comprenant une surface réfléchissante tournée vers l'au moins un récipient (2),
- une source de lumière (20) émettant dans une plage de longueurs d'onde compatible avec la croissance des plantes,
- la surface réfléchissante de l'enveloppe (9) et la source de lumière étant configurées pour que la lumière émise par la source de lumière (20) soit réfléchie par la surface réfléchissante en direction du récipient (2).

## Description

La présente invention porte sur un dispositif de croissance pour plantes destiné à équiper un récipient au moins partiellement transparent pour la culture *in vitro* d'au moins une plante afin de permettre le développement de la plante ou des plantes également lorsque la lumière naturelle est absente ou insuffisante pour leur développement naturel.

Un tel type de culture *in vitro* est bien connu. Selon ce type de culture, une plante est amenée à se développer sur un substrat constitué d'un milieu nutritif stérile, généralement sous forme de gel et généralement transparent, renfermant les substances nécessaires à la plante. La plante et son substrat sont contenus dans un récipient stérile hermétiquement scellé ou fermé par un bouchon permettant uniquement les échanges gazeux, et au moins partiellement, de préférence totalement, transparent de façon à constituer, à l'intérieur du récipient, une atmosphère aseptique dans laquelle la plante est protégée des infections des pathogènes et d'insectes et ne peut elle-même disséminer des allergènes, tel que le pollen, qu'elle pourrait produire.

Une description plus complète de la culture de plantes *in vitro* peut être trouvée, entre autres, dans les articles suivants :
- La culture *in vitro* et ses applications horticoles, éditeurs Tec & Doc, auteurs Augé et al., 1999
- *In vitro* culture of higher plants, Pierik, 1987
- Plant biotechnology and agriculture, chapitre 9 : Plant tissue culture for biotechnology, Kumar and Loh, 2012.

Les récipients contenant les plantes en développement *in vitro* sans nécessiter d'entretien apparaissent alors naturellement comme des objets de décoration intérieure dont l'esthétique tient à chaque fois de la forme de la plante et de la forme du récipient avantageusement transparent, avec l'avantage complémentaire que l'usager peut voir jour après jour la plante se développer.

Il existe toutefois une limitation à l'utilisation de ces récipients de culture *in vitro* comme objets de décoration intérieure. En effet, il faudrait que ces récipients puissent faire partie d'une décoration intérieure quel que soit l'éclairage de la pièce, autrement dit puissent être utilisés également dans des pièces sombres, où il n'y a en principe pas suffisamment de lumière pour que les plantes en tant qu'organismes vivants puissent pousser correctement, voire également la nuit ou dans l'obscurité.

Dans la demande de certificat d'utilité français n° 2 975 257, est décrit un mode de réalisation dans lequel une DEL éclaire le récipient par le dessous. Une telle DEL permet d'éclairer le substrat mais n'est d'aucune aide pour permettre à la plante de pousser.

La Société déposante a recherché un moyen pour résoudre le problème posé d'assurer en toutes circonstances le développement d'une plante dans un récipient en condition *in vitro,* sachant qu'apporter de la lumière par le dessus de la plante ferait appel à des moyens d'éclairage qui empêcheraient d'atteindre le but recherché pour l'objet de décoration, à savoir celui de permettre à l'utilisateur de voir la plante, et qu'apporter de la lumière par le dessous soit éclairerait le fond du récipient et donc le substrat, la lumière n'ayant pas de visée physiologique, soit éclairerait le dessous des feuilles de la plante, celle-ci étant alors amenée à flétrir.

Pour résoudre le problème qui vient d'être exposé, la solution apportée conformément à la présente invention consiste à adresser de la lumière le long de la paroi du récipient, dans sa région inférieure, afin de ne pas cacher la plante.

La présente invention a donc d'abord pour objet un dispositif de croissance pour plantes destiné à équiper au moins un récipient transparent de culture *in vitro* d'au moins une plante en place sur un substrat se trouvant dans le fond de l'au moins un récipient, caractérisé par le fait qu'il comprend un organe de réception de la partie inférieure du ou de chaque récipient, l'organe de réception comprenant :
- une enveloppe configurée pour entourer au moins partiellement la partie inférieure de l'au moins un récipient, l'enveloppe comprenant une surface réfléchissante tournée vers l'au moins un récipient,
- une source de lumière émettant dans une plage de longueurs d'onde compatible avec la croissance des plantes,
- la surface réfléchissante de l'enveloppe et la source de lumière étant configurées pour que la lumière émise par la source de lumière soit réfléchie par la surface réfléchissante en direction du récipient.

Ainsi, selon l'invention, la lumière émise par la source de lumière est réfléchie vers le récipient. Le fait que l'enveloppe entoure au moins partiellement la partie inférieure du récipient permet de réfléchir la lumière vers le dessus des feuilles, pour favoriser la croissance des plantes.

Selon un mode de réalisation, la surface réfléchissante de l'enveloppe est directement en regard de l'au moins un récipient.

Selon un mode de réalisation, l'enveloppe est creuse, la surface réfléchissante de l'enveloppe étant une surface interne de l'enveloppe, la surface de l'enveloppe directement en regard de l'au moins un récipient étant une surface diffusante qui diffuse vers l'au moins un récipient la lumière réfléchie par la surface réfléchissante, la paroi de l'enveloppe qui a la surface réfléchissante pouvant être plus épaisse que la paroi de l'enveloppe qui a la surface diffusante et/ou la surface réfléchissante pouvant être une feuille d'un matériau réfléchissant telle qu'une feuille métallique, comme une feuille d'aluminium.

A titre d'exemple, on peut mentionner une paroi d'enveloppe ayant la surface réfléchissante ayant une épaisseur de 2,5 mm et une paroi d'enveloppe ayant la surface diffusante de 1 à 1,8 mm.

Dans le cas où l'enveloppe est creuse, que la surface réfléchissante de l'enveloppe est une surface interne de l'enveloppe, que la surface de l'enveloppe directement en regard de l'au moins un récipient est une surface diffusante qui diffuse vers l'au moins un récipient la lumière réfléchie par la surface réfléchissante et que l'enveloppe est constituée d'un seul matériau, alors la surface interne de l'enveloppe possède également une propriété de diffusion de la lumière et la surface de l'enveloppe directement en regard de l'au moins un récipient possède également une propriété de réflexion de la lumière.

Ceci ne présente pas de problème dans la mesure où l'ensemble des sources lumineuses disponibles sur le marché présente une intensité lumineuse totale suffisante pour que la lumière qui atteigne la plante dans l'au moins un récipient soit suffisante pour assurer sa croissance. Ceci permet même d'améliorer l'aspect esthétique du dispositif selon l'invention, un halo lumineux étant formé tout autour de l'enveloppe.

Le dispositif selon l'invention peut être destiné à équiper au moins un récipient en forme de ballon, d'erlenmeyer ou de bouteille, ladite enveloppe présentant respectivement une forme généralement tronconique s'évasant vers le haut en position d'utilisation, une forme généralement tronconique s'évasant vers le haut ou vers le bas en position d'utilisation, ou une forme généralement cylindrique.

L'enveloppe peut être apte à entourer totalement la région inférieure du récipient, le cas échéant avec un espacement ou des zones d'espacement entre l'enveloppe et le récipient, et la source de lumière est disposée pour émettre de la lumière de façon régulièrement répartie et enveloppante.

La source de lumière peut émettre à partir de la région se trouvant sous le récipient en position d'utilisation et en périphérie.

La source de lumière peut être constituée par un système de diodes électroluminescentes (DEL), à alimentation filaire ou à système de recharge par induction, lesdites diodes pouvant avoir au moins l'une des caractéristiques suivantes :
- être orientables ;
- être aptes à diffuser de la lumière d'une longueur d'onde de 400 nm à 700 nm, en particulier de 430 nm à 660 nm ;
- avoir chacune une puissance de 25 à 125 mW et un flux lumineux de 6 à 17 lumens.

L'utilisation de DEL permet de rendre minimale la chaleur émise.

En particulier, les diodes électroluminescentes peuvent être portées par une plaque à la périphérie de celle-ci, en y étant avantageusement réparties, ladite plaque étant disposée pour que ses DEL émettent de la lumière à partir de la région de base du dispositif en position d'utilisation.

L'organe de réception peut comprendre un circuit de commande des diodes électroluminescentes, de type processeur, microprocesseur, microcontrôleur, processeur de signaux numériques (DSP), matrice prédiffusée programmable (FPGA) ou circuit intégré à application spécifique (ASIC), qui exécute un programme de commande des diodes électroluminescentes.

L'organe de réception peut être alimenté par piles, par batterie ou sur secteur.

L'enveloppe peut être fermée à sa partie inférieure par un fond sur lequel le récipient de culture est destiné à être posé, ladite enveloppe étant alors à double paroi, au moins la paroi interne en position d'utilisation étant réalisée en un matériau translucide tel qu'une céramique ou une porcelaine, ou pouvant avoir un effet translucide, tel que le verre sablé, la source de lumière étant apte à émettre la lumière entre les deux parois de ladite enveloppe à partir de la région de base du dispositif en utilisation, la lumière subissant alors une réflexion entre les deux parois de l'enveloppe, puis diffusant à travers la paroi interne pour éclairer le récipient et en conséquence la plante, ou la source de lumière étant apte à émettre la lumière à partir de la surface intérieure de la paroi externe de l'enveloppe, l'enveloppe pouvant être formée d'un seul tenant par exemple par moulage, les parois interne et externe étant réunies à leurs extrémités opposées au fond, la paroi externe pouvant être de plus grande épaisseur que la paroi interne et/ou une feuille d'un matériau réfléchissant, telle qu'une feuille métallique, comme une feuille d'aluminium, pouvant être disposée contre la surface interne de la paroi externe.

D'autres matériaux diffusants peuvent également être envisagés, tels que le polyméthacrylate de méthyle (PMMA) dépoli, sans s'écarter du cadre de la présente invention.

L'enveloppe à double paroi permet de former un halo de lumière à effet principalement esthétique lorsque le dispositif d'éclairage est en service.

En particulier, lorsque les DEL sont portées par une plaque, ladite plaque à DEL peut être disposée sous le fond fermant l'enveloppe de sorte que les DEL situées en périphérie émettent de la lumière à partir de la région inférieure entre les deux parois de l'enveloppe.

L'enveloppe à double paroi et fermée par un fond peut être formée par une plaque de fond repliée le long de sa bordure extérieure pour former la paroi interne de l'enveloppe laquelle est repliée vers le bas pour former la paroi externe de l'enveloppe.

Le dispositif selon la présente invention peut comporter un socle sur lequel l'enveloppe est apte à prendre appui, ledit socle pouvant être réalisé en deux parties, à savoir une partie supérieure et une partie inférieure aptes à être emboîtées l'une sur l'autre et délimitant entre elles une cavité apte à recevoir l'organe de commande ou une partie de commande de la source de lumière.

En particulier, la plaque à DEL peut reposer sur la surface supérieure du socle, le fond de l'enveloppe vient se disposer au-dessus de la plaque à DEL, et la paroi externe de l'enveloppe à double paroi présente un repli vers l'intérieur pour former une partie annulaire d'appui contre la surface supérieure du socle.

Le dispositif selon la présente invention peut comporter un système de régulation de l'éclairage, en particulier un système de modulation de son intensité en fonction de la quantité de lumière naturelle, ou un système imposant une photopériode.

La présente invention a également pour objet un récipient ou groupe de récipients dans lequel ou lesquels est ou sont installées une ou des plantes en culture *in vitro* et qui est ou sont équipés d'un dispositif tel que défini ci-dessus.

Pour mieux illustrer l'objet de la présente invention, on va en décrire ci-après , à titre indicatif et non limitatif, plusieurs modes de réalisation particuliers avec référence au dessin annexé.

Sur ce dessin :
[Fig. 1] est une vue en perspective d'un récipient de culture d'une plante *in vitro* en forme de ballon en place sur un socle d'un dispositif conforme à un mode de réalisation particulier de l'invention ;
[Fig. 2] est une vue en perspective éclatée du dispositif de la Figure 1 sans le récipient de culture;
[Fig. 3] est une vue en élévation de face du dispositif de la Figure 2 à l'état monté ;
[Fig. 4] est une vue de dessus du dispositif de la Figure 2 à l'état monté ;
[Fig. 5] est, à plus grande échelle, une vue en coupe verticale du dispositif de la Figure 1, selon V-V de la Figure 3 ;
[Fig. 6] est une vue analogue à la Figure 1 montrant un récipient de culture en forme d'erlenmeyer ; et

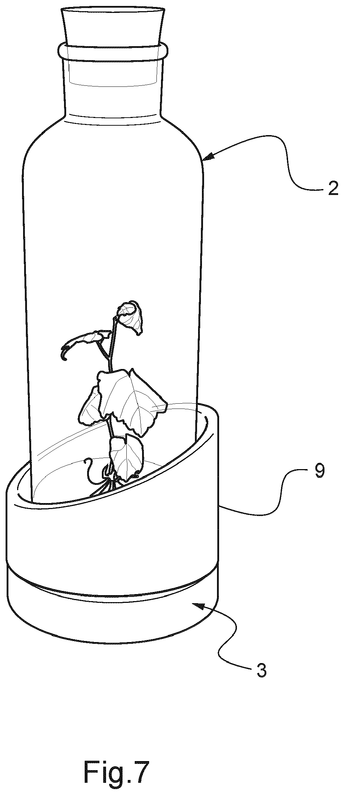

[Fig. 7] est une vue analogue à la Figure 1 montrant un récipient de culture en forme de bouteille.

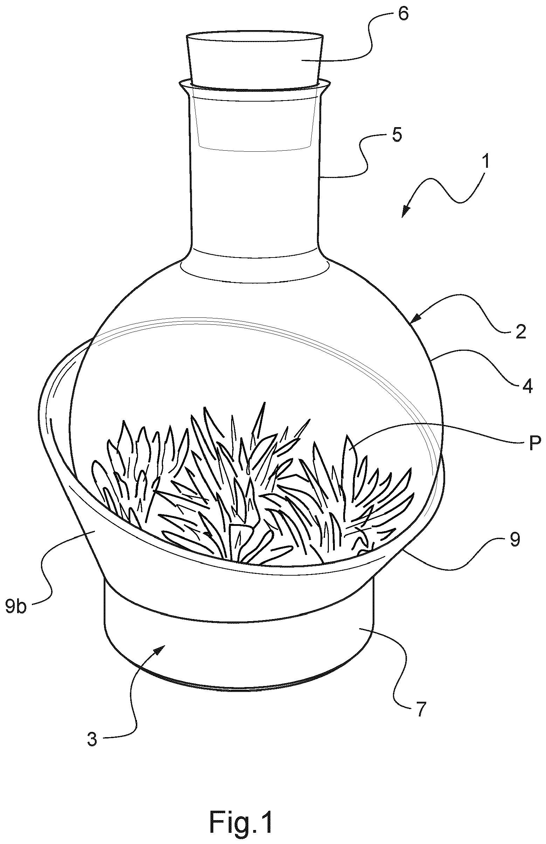

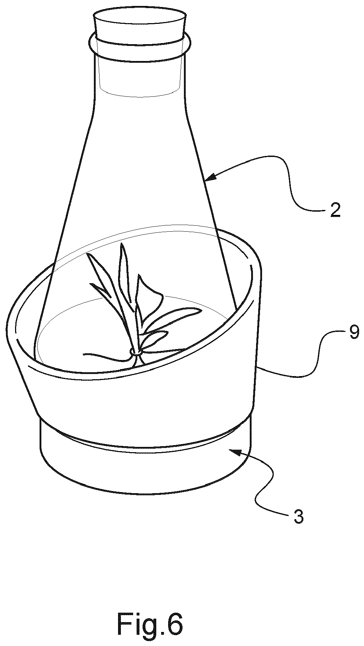

Si l'on se réfère aux Figures 1 à 6, on peut voir que l'on a représenté par 1 dans son ensemble un récipient 2 de culture *in vitro* en place dans un dispositif 3 permettant le développement de la plante P qu'il contient quel que soit l'éclairage de la pièce et constituant avec lui un objet de décoration intérieure pouvant être observé à tout instant même dans l'obscurité.

Le récipient 2 est en verre et présente un corps 4 généralement sphérique à fond plat surmonté par un col 5 fermé par un bouchon en liège 6. Dans le fond du corps 4 du récipient 2 est disposé un milieu aqueux gélifié stérile, généralement transparent, lequel constitue le substrat nutritif pour la plante P en développement.

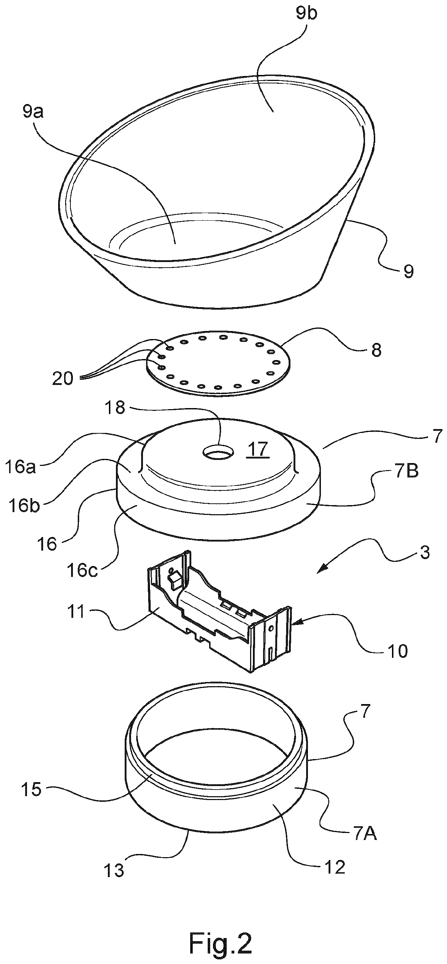

Le récipient 2 est destiné à être posé par son fond sur un socle 7 avec interposition d'une plaque à DEL 8 et du fond 9a d'une enveloppe-réceptacle 9, position dans laquelle il est entouré dans sa partie inférieure par la paroi latérale 9b de l'enveloppe-réceptacle 9, cette dernière reposant par sa base 9c sur la périphérie du socle 7. Ce sont tous les éléments 7, 8 et 9 qui sont montrés en perspective éclatée sur la Figure 2.

Le rôle de la plaque à DEL 8 et celui de l'enveloppe-réceptacle 9 seront décrits dans ce qui suit.

Le socle 7, la plaque à DEL 8 et l'enveloppe-réceptacle 9 constituent donc, avec le dispositif 10 d'alimentation des DEL dont on peut voir le support 11 sur la Figure 2, le dispositif 3 selon l'invention.

Sur la Figure 2, on peut également voir que le socle 7 est réalisé en deux parties, à savoir une partie basse ou embase 7A et une partie haute ou couvercle 7B. Le socle 7 peut être en bois ou en matière plastique. Le bois est par exemple un bois d'essence dure, tel que le hêtre, le châtaignier ou le chêne.

L'embase 7A a la forme d'une boîte cylindrique de faible hauteur, constituée par une paroi cylindrique 12 raccordée à un fond circulaire 13 par lequel le dispositif 3 sera posé sur une table, un guéridon ..., l'ensemble 1 étant, comme déjà indiqué, un objet de décoration intérieure.

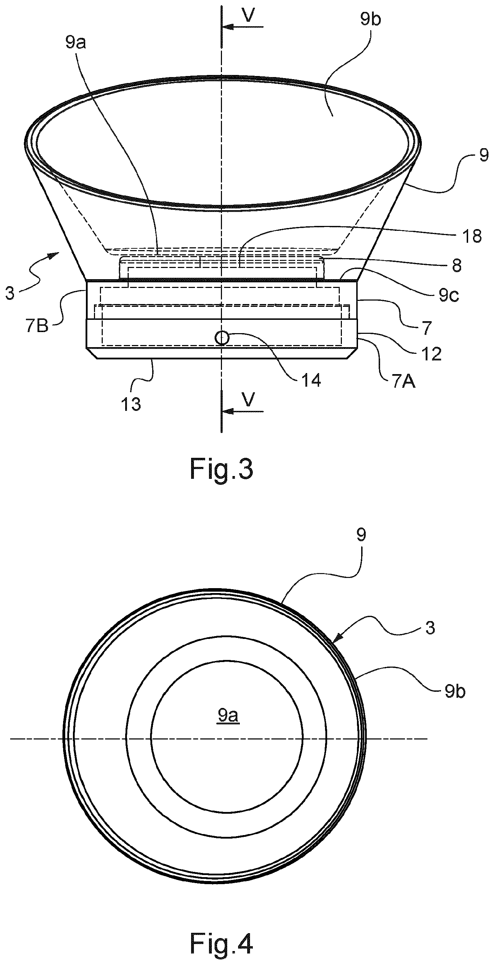

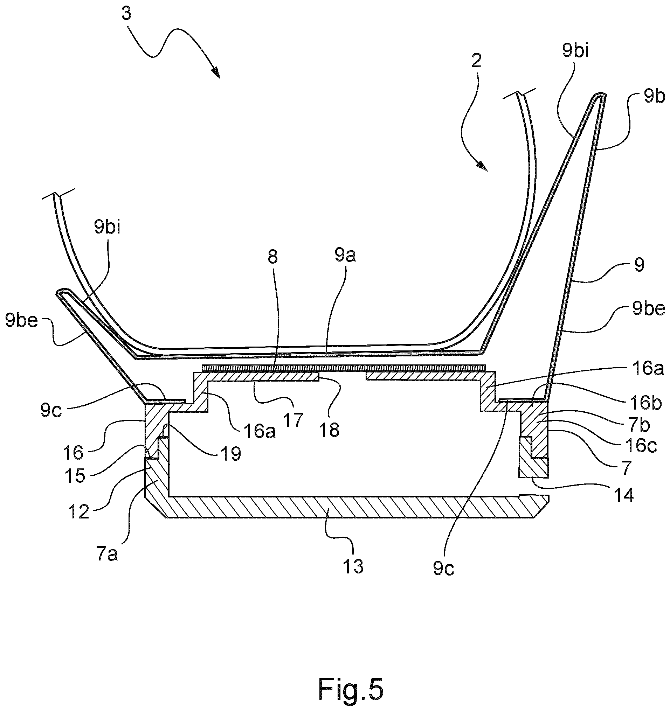

La paroi 12 présente un trou 14 (Figures 3 et 5) dont le rôle est indiqué plus loin et, au voisinage de sa bordure supérieure, la face externe de la paroi 12 présente un décrochement annulaire 15 vers l'intérieur au-dessus duquel elle est de plus faible épaisseur.

Le couvercle 7B du socle 7 est apte à venir coiffer l'embase 7A et est constitué par une jupe 16 raccordée à un fond circulaire plat 17 comportant une ouverture centrale 18. La jupe 16 présente dans sa partie 16a de jonction avec le fond 17 une forme cylindrique qui est de même diamètre extérieur que le fond 17 et qui est repliée d'équerre vers l'extérieur pour former une collerette 16b, laquelle est, le long de sa bordure libre, repliée vers le bas pour former une seconde partie 16c de la jupe 16 de plus grand diamètre que la partie 16a.

Si l'on se réfère à la Figure 5, on peut par ailleurs voir que la face interne de la partie 16c de la jupe 16 présente, au voisinage de sa bordure inférieure, un décrochement annulaire 19 à partir duquel elle présente un plus grand diamètre intérieur. Cette disposition permet d'emboîter les parties 7A et 7B du socle 7 comme on peut le voir sur la Figure 5.

La plaque à DEL 8 porte à sa périphérie des DEL 20 (Figure 2) avantageusement régulièrement réparties. Les DEL 20 n'ont pas été représentées sur la Figure 5 pour ne pas la surcharger.

L'enveloppe-réceptacle 9 présente un fond 9a dont le bord est relevé en s'évasant vers le haut en position de montage pour former la paroi latérale 9b de l'enveloppe-réceptacle 9, paroi latérale qui est destinée à venir se placer autour de la partie inférieure du ballon 2. Ceci constitue un moyen de guidage de la lumière qui sera émise par les DEL 20.

Dans l'exemple représenté, la paroi latérale 9b de l'enveloppe-réceptacle 9 est creuse, étant en fait une double paroi, formée par une première partie interne 9bi qui est repliée à son extrémité libre pour former une seconde partie externe 9be, laquelle est repliée vers l'intérieur à son extrémité libre pour former la base annulaire 9c par lequel l'enveloppe-réceptacle 9 va venir reposer sur la collerette 16b du couvercle 7B du socle 7, le fond 9a étant quant à lui disposé au-dessus de la plaque à DEL 8.

La surface interne de la partie externe 9be de la paroi latérale 9b est réfléchissante et la partie interne 9bi de la paroi latérale 9b permet de laisser passer la lumière de telle sorte que la lumière émise par les DEL 20 pourra être réfléchie par la partie externe 9be et diffusée par la partie interne 9bi vers le récipient 2.

Pour obtenir un effet esthétique tout en assurant un bon emboîtement du ballon 2 dans son enveloppe-réceptacle 9 qui reçoit ainsi la partie inférieure du ballon 2, la bordure supérieure libre de l'enveloppe-réceptacle 9 se situe dans un plan incliné, la hauteur de la paroi 9bi étant variable et s'évasant davantage dans sa partie de moindre hauteur.

L'enveloppe-réceptacle 9 est réalisée ici en porcelaine blanche dont l'épaisseur fine assure la translucidité.

En position de montage, l'alimentation 10 des LED 20 est, dans son support 11, reçue dans l'embase 7A du socle 7, le cordon d'alimentation passant par l'ouverture 14 de celle-ci. Le couvercle 7B du socle 7 est placé sur l'embase 7A et les alimentations des DEL 20 de la plaque 8 sont mises en service, les fils d'alimentation passant par l'ouverture 18. Ensuite, on vient disposer l'enveloppe-réceptacle 9 et on place le ballon 2 sur le fond 9a de cette dernière.

Dans cette position, les DEL 20 éclairent l'espace périphérique inférieur du ballon 2.

A la place d'une technologie filaire pour l'alimentation des DEL 20, on pourrait utiliser une technologie par induction, auquel cas l'embase 7A du socle 7 pourrait être de moindre hauteur.

On peut ainsi mettre en service les DEL 20 pour favoriser la pousse de la plante P quel que soit l'éclairage de la pièce, autrement dit même si l'emplacement dans lequel le ballon 2 est placé est sombre et ne permettrait pas à la plante P de pousser.

On peut choisir les périodes de mise en service des DEL 20, un système de régulation de l'éclairage pouvant être avantageusement prévu.

Lors d'un éclairage, la lumière est projetée contre la surface réfléchissante de la paroi externe 9be de l'enveloppe 9 et est ensuite réfléchie par la paroi externe 9be vers la paroi interne 9bi. La lumière réfléchie traverse alors la paroi interne 9bi et est diffusée par celle-ci en direction du ballon 2. Cette lumière de diffusion éclaire par le dessus le feuillage de la plante P tout en laissant bien apparaître celle-ci à la vue. C'est ce halo lumineux qui permet la pousse de la plante P dans toutes les conditions, y compris celles qui sont normalement défavorables : faible luminosité, obscurité.

### Exemple de l'invention et exemple comparatif

On a utilisé comme récipient pour la culture *in vitro* d'une plante, un ballon rond tel que celui représenté sur le Figure 1.

La plaque 8 à DEL de forme circulaire de 12 cm de diamètre externe, comportait 39 DEL 20 à sa périphérie, à savoir 3,25 DEL par unité de longueur. La quantité de lumière émise par le module pour une puissance déterminée de 2,67 W était de 400 lumens (équivalent à 1600 Lux) ou pour une puissance déterminée de 5,33 W de 800 lumens (équivalent à 3200 Lux).

Dans le fond du ballon 2, on a placé 45 mL de milieu nutritif sous forme de gel transparent. Ce milieu nutritif est constitué d'eau, de minéraux, de vitamines, de saccharose et de gélifiant. On a ensuite bouché le ballon à l'aide d'un bouchon en liège.

On a ensuite placé le ballon 2 sur le dispositif 3 selon l'invention et on l'a soumis à un éclairage permanent d'une intensité de 1600 lx ou de 3200 lx sur une durée de neuf mois.

Afin de comparer l'effet de l'enveloppe 9 du dispositif selon l'invention, on a réalisé dans les mêmes conditions, la culture d'une plante in vitro, à la différence que le dispositif 3 ne comportait pas l'enveloppe 9.

La plante éclairée avec l'enveloppe du dispositif selon l'invention s'est développée de façon plus conséquente et occupait un volume plus grand du récipient de culture que la plante éclairée sans l'enveloppe. Le feuillage est plus dense et ne présente pas de feuille en mauvais état dans le cas de la plante éclairée avec l'enveloppe. Dans le cas de la plante éclairée sans l'enveloppe, le feuillage était moins dense et certaines feuilles présentaient une perte de vitalité.

## Revendications

1. Dispositif (3) de croissance pour plantes destiné à équiper au moins un récipient (2) transparent de culture *in vitro* d'au moins une plante (P) en place sur un substrat se trouvant dans le fond de l'au moins un récipient (2), **caractérisé par le fait qu'**il comprend un organe de réception de la partie inférieure du ou de chaque récipient (2), l'organe de réception comprenant :
- une enveloppe (9) configurée pour entourer au moins partiellement la partie inférieure de l'au moins un récipient (2), l'enveloppe (9) comprenant une surface réfléchissante tournée vers l'au moins un récipient (2),
- une source de lumière (20) émettant dans une plage de longueurs d'onde compatible avec la croissance des plantes,
- la surface réfléchissante de l'enveloppe (9) et la source de lumière étant configurées pour que la lumière émise par la source de lumière (20) soit réfléchie par la surface réfléchissante en direction du récipient (2).

2. Dispositif (3) selon la revendication 1, **caractérisé par le fait que** la surface réfléchissante de l'enveloppe (9) est directement en regard de l'au moins un récipient (2).

3. Dispositif (3) selon la revendication 1, **caractérisé par le fait que** l'enveloppe (9) est creuse, la surface réfléchissante de l'enveloppe (9) étant une surface interne de l'enveloppe (9), la surface de l'enveloppe (9) directement en regard de l'au moins un récipient (2) étant une surface diffusante qui diffuse vers l'au moins un récipient la lumière réfléchie par la surface réfléchissante, la paroi de l'enveloppe (9) qui a la surface réfléchissante pouvant être plus épaisse que la paroi de l'enveloppe qui a la surface diffusante et/ou la surface réfléchissante pouvant être une feuille d'un matériau réfléchissant telle qu'une feuille métallique, comme une feuille d'aluminium.

4. Dispositif (3) selon l'une des revendications 1 à 3, **caractérisé par le fait qu'**il est destiné à équiper au moins un récipient (2) en forme de ballon, d'erlenmeyer ou de bouteille, ladite enveloppe (9) présentant respectivement une forme généralement tronconique s'évasant vers le haut en position d'utilisation, une forme généralement tronconique s'évasant vers le haut ou vers le bas en position d'utilisation, on une forme généralement cylindrique.

5. Dispositif (3) selon l'une des revendications 1 et 4, **caractérisé par le fait que** l'enveloppe (9) est apte à entourer totalement la région inférieure du récipient (2), le cas échéant avec un espacement ou des zones d'espacement entre l'enveloppe (9) et le récipient (2), et la source de lumière (20) est disposée pour émettre de la lumière de façon régulièrement répartie et enveloppante.

6. Dispositif (3) selon l'une des revendications 1 à 5, **caractérisé par le fait que** la source de lumière (20) émet à partir de la région se trouvant sous le récipient en position d'utilisation et en périphérie.

7. Dispositif (3) selon l'une des revendications 1 à 6, **caractérisé par le fait que** la source de lumière (20) est constituée par un système de diodes électroluminescentes (DEL), à alimentation filaire ou à système de recharge par induction, lesdites diodes pouvant avoir au moins l'une des caractéristiques suivantes :
- être orientables ;
- être aptes à diffuser de la lumière d'une longueur d'onde de 400 nm à 700 nm, en particulier de 430 nm à 660 nm ;
- avoir chacune une puissance de 25 à 125 mW et un flux lumineux de 6 à 17 lumens.

8. Dispositif (3) selon la revendication 7, **caractérisé par le fait que** les diodes électroluminescentes, DEL, sont portées par une plaque (8) à la périphérie de celle-ci, en y étant avantageusement réparties, ladite plaque étant disposée pour que ses DEL émettent de la lumière à partir de la région de base du dispositif (3) en position d'utilisation.

9. Dispositif (3) selon l'une des revendications 1 et 3 à 7, **caractérisé par le fait que** l'enveloppe (9) est fermée à sa partie inférieure par un fond (9a) sur lequel le récipient (2) de culture est destiné à être posé, ladite enveloppe (9) étant alors à double paroi, au moins la paroi interne (9bi) en position d'utilisation étant réalisée en un matériau translucide tel qu'une céramique ou une porcelaine, ou pouvant avoir un effet translucide, tel que le verre sablé, la source de lumière (20) étant apte à émettre la lumière entre les deux parois de ladite enveloppe (9) à partir de la région de base du dispositif (3) en utilisation, la lumière subissant alors une réflexion entre les deux parois de l'enveloppe, puis diffusant à travers la paroi interne (9bi) pour éclairer le récipient (2) et en conséquence la plante (P), ou la source de lumière (20) étant apte à émettre la lumière à partir de la surface intérieure de la paroi externe (9be) de l'enveloppe (9), l'enveloppe (9) pouvant être formée d'un seul tenant par exemple par moulage, les parois interne (9bi) et externe (9be) étant réunies à leurs extrémités opposées au fond, la paroi externe (9be) pouvant être de plus grande épaisseur que la paroi interne (9bi) et/ou une feuille d'un matériau réfléchissant, telle qu'une feuille métallique, comme une feuille d'aluminium, pouvant être disposée contre la surface interne de la paroi externe (9be) .

10. Dispositif (3) selon les revendications 8 et 9, prises en combinaison, **caractérisé par le fait que** la plaque (8) à DEL est disposée sous le fond (9a) fermant l'enveloppe (9) de sorte que les DEL situées en périphérie émettent de la lumière à partir de la région inférieure entre les deux parois (9be, 9bi) de l'enveloppe (9).

11. Dispositif (3) selon l'une des revendications 8 et 9, **caractérisé par le fait que** l'enveloppe (9) à double paroi et fermée par un fond (9a) est formée par une plaque de fond repliée le long de sa bordure extérieure pour former la paroi interne (9bi) de l'enveloppe (9) laquelle est repliée vers le bas pour former la paroi externe (9be) de l'enveloppe.

12. Dispositif (3) selon l'une des revendications 1 à 11, **caractérisé par le fait qu'**il comporte un socle (7) sur lequel l'enveloppe (9) est apte à prendre appui, ledit socle (7) pouvant être réalisé en deux parties, à savoir une partie supérieure (7B) et une partie inférieure (7A) aptes à être emboîtées l'une sur l'autre et délimitant entre elles une cavité apte à recevoir l'organe de commande (10) ou une partie de commande de la source de lumière (20) .

13. Dispositif (3) selon les revendications 8, 9 à 11 et 12 prises en combinaison, **caractérisé par le fait que** la plaque (8) à DEL repose sur la surface supérieure du socle (7), le fond de l'enveloppe (9) vient se disposer au-dessus de la plaque (8) à DEL, et la paroi externe (9be) de l'enveloppe (9) à double paroi présente un repli vers l'intérieur pour former une partie annulaire d'appui contre la surface supérieure du socle (7).

14. Dispositif (3) selon l'une des revendications 1 à 13, **caractérisé par le fait qu'**il comporte un système de régulation de l'éclairage, en particulier un système de modulation de son intensité en fonction de la quantité de lumière naturelle, ou un système imposant une photopériode.

15. Récipient ou groupe de récipients dans lequel ou lesquels est ou sont installées une ou des plantes (P) en culture *in vitro* et qui est ou sont équipés d'un dispositif (3) tel que défini à l'une des revendications 1 à 14.
